# FASCICULE DE BREVET EUROPEEN

(11) **EP 0 961 894 B1**
(45) Date de publication et mention de la délivrance du brevet: **12.05.2004**
(21) Numéro de dépôt: 98962485.3
(22) Date de dépôt: 17.12.1998
(51) Int. Cl.: F16K 31/40

(54) **VALVE MONOSTABLE**
MONOSTABILES VENTIL
MONOSTABLE VALVE

(30) Priorité: 18.12.1997 FR 9716424
(43) Date de publication de la demande: 08.12.1999
(73) Titulaire: Simoens, Hervé, 59100 Roubaix (FR)
(72) Inventeur: Simoens, Hervé, 59100 Roubaix (FR)
(74) Mandataire: Tournel, Jean Louis
(86) Numéro de dépôt international: PCT/FR1998/002756
(87) Numéro de publication internationale: WO 1999/032818

(56) Documents cités:
- WO-A-93/01433
- US-A- 3 905 575
- US-A- 4 201 362

## Description

L'invention se rapporte à une valve monostable pour la charge progressive puis le contrôle de la décharge brusque d'un gaz contenu dans une capacité.

Pour faciliter l'écoulement de matière granuleuse et/ou éviter la formation de concrétion, par exemple, dans les fours pour la fabrication du ciment, on utilise des dispositifs connus sous le nom de canons à air.

Ce dispositif comprend une capacité dans laquelle on accumule sous pression un volume d'air puis périodiquement cet air est relâché brutalement, par exemple, au travers d'une buse, de sorte que la déflagration produite, élimine les concrétions.

Pour permettre, dans un premier temps, l'accumulation de l'air dans la capacité et, dans un deuxième temps, cette brusque décharge, entre la capacité et la buse, est disposée une valve monostable qui commande le passage de l'air depuis une source dans la capacité et depuis la capacité vers la buse ou autre moyen.

Classiquement, cette valve monostable *(US 3.905.575)* comprend :
- un corps délimitant un chambre présentant, d'une part, une conduite d'entrée reliée à la capacité et, d'autre part, un orifice dit de décharge vers une conduite de sortie,
- un piston logé dans la chambre précitée se déplaçant entre une position dite d'obturation dans laquelle la face avant de ce piston obture l'orifice de décharge et une position dite ouverte dans laquelle cette face avant est écartée de l'orifice de décharge de sorte que l'air de la capacité peut s'évacuer brusquement par la conduite de sortie, lequel piston :
   . d'une part, présente une collerette scindant la chambre en une chambre avant et une chambre arrière dont la face dite "face avant" tournée vers l'avant du piston et vers l'orifice de décharge est soumise à la pression de l'air emprisonné dans la capacité, laquelle pression développe une force dite d'ouverture tendant à faire reculer le piston et à l'amener en position ouverte et
   . d'autre part, délimite, entre sa face arrière et le corps de la valve, la dite chambre arrière dans laquelle s'exerce une pression développant sur l'arrière du piston une force dite d'obturation poussant le piston vers sa position d'obturation, laquelle force d'obturation est de module sensiblement identique mais de sens opposé à celle de la force d'ouverture, et
- un moyen pour abaisser brusquement la pression dans la chambre arrière et ainsi provoquer le recul brusque du piston.

L'efficacité de ces canons à air dépend certes notamment du volume de la capacité et de la pression de l'air contenu dans celle-ci, mais également tant de la vitesse de mise en communication de la capacité avec la conduite de sortie que de la perte de charge.

On connaît par exemple une valve (FR-A-2.660.395) dont le piston se présente sous la forme d'une cuvette permettant ainsi de réduire le poids, et donc *l'inertie*, du piston ce qui permet d'améliorer sensiblement la vitesse de recul dudit piston.

La concavité de la cuvette permet en outre d'y loger un coulisseau de faible section et formant le moyen de guidage du piston et permettant ainsi de réduire la longueur du piston par rapport à un piston conventionnel.

Pour abaisser brusquement la pression dans la chambre arrière, l'air de cette chambre doit être rapidement évacué.

Pour tenter d'y parvenir, on connaît une valve (FR-A-2.712.639) comprenant :
- situé sur une conduite d'évacuation reliant la chambre arrière à la conduite de sortie, un obturateur dit obturateur principal mobile entre une position dite de fermeture et une position dite d'échappement, cet obturateur étant sollicité :
   . d'une part, vers sa position dite d'échappement par la pression qui, régnant dans la chambre arrière précitée, développe sur la face avant de cet obturateur une force dite d'échappement et,
   . d'autre part, vers sa position de fermeture par la pression d'un gaz qui, contenu dans une chambre dite de commande, développe sur la face arrière de l'obturateur une force dite de fermeture appliquant l'obturateur sur son siège et
- des moyens de rappel du piston et de l'obturateur principal respectivement en leur position d'obturation et de fermeture.

Une source de gaz sous pression est reliée à cette valve et alimente la chambre de commande qui alimente la chambre arrière par une canal dit d'alimentation de faible section et cette chambre arrière alimente la capacité par une fuite contrôlée.

Ainsi, lors du remplissage de la capacité c'est la pression d'alimentation qui maintient le piston et l'obturateur en appui sur leur siège respectif.

Un distributeur est placé entre la source de gaz sous pression et la valve.

Pour provoquer le déplacement du piston, on interrompt l'alimentation en gaz pressurisé puis, par l'intermédiaire du distributeur précité, on relie au moins indirectement à l'atmosphère la chambre de commande de sorte que la pression s'abaissant rapidement, l'obturateur s'ouvre pour laisser s'échapper le gaz contenu dans la chambre arrière.

Cette baisse de pression dans la chambre arrière permet au piston de reculer afin d'établir la communication entre la capacité et la conduite de sortie.

Cette succession d'étapes permet, avec une relativement faible pression de commande, de libérer un volume d'air trés important.

Le parcours au travers duquel le gaz s'échappe est sinueux et provoque malheureusement une forte perte de charge.

Dans l'exemple (FR-A-2.660.395), la conduite d'entrée qui relie la capacité à la valve présente un diamètre constant légèrement inférieur à la longueur du piston, en regard de la paroi latérale duquel piston, cette conduite d'entrée débouche.

Cette constance du diamètre réduit les pertes de charge du fluide qui s'écoule depuis la capacité jusqu'à la conduite de sortie.

On connaît également une valve (US-4.201.362) dont l'ouverture est commandée par déplacement de deux obturateurs.

Ainsi, la valve comprend :
- sur une conduite dite de commande reliant la chambre de commande au moins indirectement à l'atmosphère, un second obturateur dit de commande mobile entre une position dite d'interruption dans laquelle le gaz contenu dans la chambre de commande ne peut s'échapper et une position dite d'évacuation dans laquelle le gaz contenu dans la chambre de commande peut s'échapper,
- un moyen moteur pour déplacer rapidement l'obturateur de commande vers sa position d'évacuation et
- un moyen de rappel de l'obturateur de commande respectivement en sa position d'interruption.

Dans ce système à commande étagée, la vitesse de recul du piston peut encore être améliorée et, de ce fait, permettre une meilleure efficacité.

A cet effet, l'invention a pour objet une valve du type précité caractérisée en ce que :
- l'aire définie par la section droite de la conduite d'évacuation est au moins constante voire croissante depuis la chambre arrière vers la conduite de sortie pour limiter la perte de charge et le tronçon de la conduite d'évacuation en amont de l'obturateur principal dit tronçon amont, a une section d'aire sensiblement identique à celle du tronçon aval, et
- l'obturateur principal est du type à membrane.

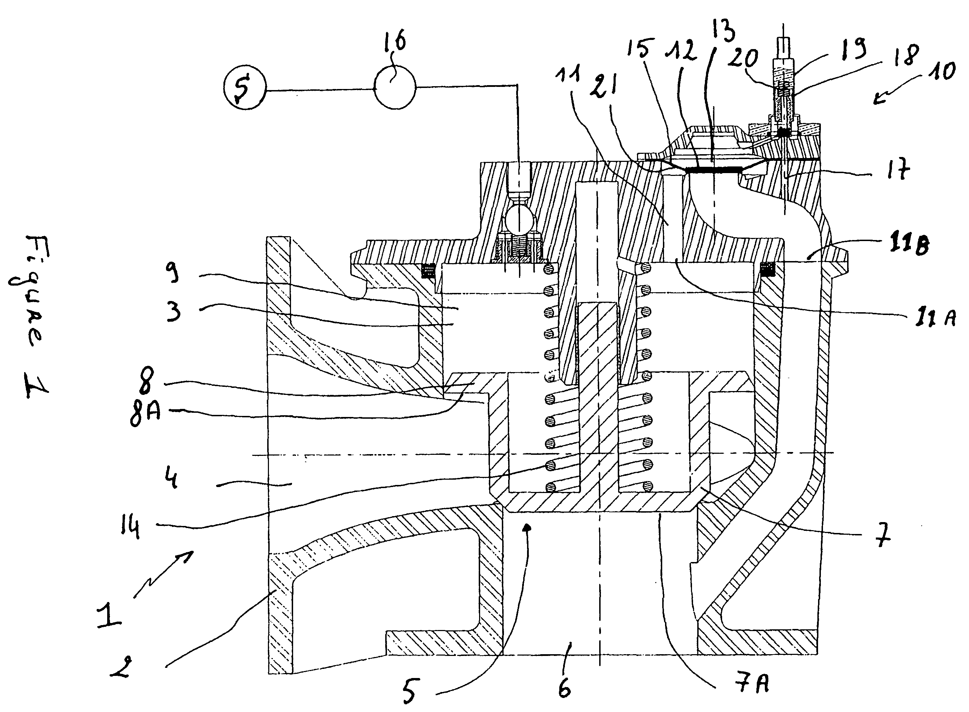

L'invention sera bien comprise à l'aide de la description ci-aprés faite à titre d'exemple non limitatif en regard du dessin ci-annexé qui représente schématiquement, une coupe verticale d'une valve monostable selon l'invention.

En se reportant au dessin, on voit que la valve 1 monostable comprend :
- un corps 2 délimitant un chambre 3 présentant, d'une part, une conduite 4 d'entrée reliée à une capacité et, d'autre part, un orifice 5 dit de décharge vers une conduite 6 de sortie,
- un piston 7 logé dans la chambre 3 précitée se déplaçant entre une position dite d'obturation dans laquelle la face 7A avant de ce piston 7 obture l'orifice de décharge et une position dite ouverte dans laquelle cette face avant est écartée de l'orifice de décharge de sorte que l'air de la capacité peut s'évacuer brusquement par la conduite de sortie, lequel piston :
   . d'une part, présente une collerette 8 scindant la chambre 3 en une chambre avant et une chambre arrière 9 dont la face 8A dite "face avant" tournée vers l'avant du piston et vers l'orifice de décharge est soumise à la pression de l'air emprisonné dans la capacité, laquelle pression développe une force dite d'ouverture tendant à faire reculer le piston et à l'amener en position ouverte et
   . d'autre part, délimite, entre sa face 8B arrière et le corps de la valve, la chambre 9 arrière dans laquelle s'exerce une pression développant sur l'arrière du piston une force dite d'obturation poussant le piston vers sa position d'obturation, laquelle force d'obturation est de module sensiblement identique mais de sens opposé à celle de la force d'ouverture, et
- un moyen 10 pour abaisser brusquement la pression dans la chambre arrière et ainsi provoquer le recul brusque du piston.

Pour abaisser brusquement la pression dans la chambre arrière classiquement la valve comprend en outre :
- situé sur une conduite 11 d'évacuation reliant la chambre 9 arrière à la conduite 6 de sortie, un obturateur 12 dit obturateur principal mobile entre une position dite de fermeture et une position dite d'échappement cet obturateur étant sollicité :
   . d'une part vers sa position dite d'échappement par la pression qui, régnant dans la chambre arrière précitée, développe sur la face avant de cet obturateur une force dite d'échappement et
   . d'autre part vers sa position de fermeture par la pression d'un gaz qui, contenu dans une chambre 13 dite de commande, développe sur la face arrière de l'obturateur une force dite de fermeture appliquant l'obturateur sur son siège et
- des moyens 14, 15 de rappel du piston et de l'obturateur principal respectivement en leur position d'obturation et de fermeture.

L'alimentation de la capacité se fait par introduction du gaz sous pression provenant d'une source S externe directement dans la chambre 9 arrière sous le contrôle d'un distributeur 16 qui communique avec la capacité par une fuite contrôlée au niveau de la portée d'étanchéité que présente la collerette du piston.

La valve comprend :
- sur une conduite 17 dite de commande reliant la chambre de commande au moins indirectement à l'atmosphère, un second obturateur 18 dit de commande mobile entre une position dite d'interruption dans laquelle le gaz contenu dans la chambre 13 de commande ne peut s'échapper et une position dite d'évacuation dans laquelle le gaz contenu dans la chambre de commande peut s'échapper,
- un moyen moteur 19 pour déplacer rapidement l'obturateur de commande vers sa position d'évacuation et
- un moyen 20 de rappel de l'obturateur de commande respectivement en sa position d'interruption.

Selon une caractéristique de l'invention
- l'aire définie par la section droite de la conduite 11 d'évacuation est au moins constante voire croissante depuis la chambre 9 arrière vers la conduite 6 de sortie pour limiter la perte de charge et
- l'obturateur 12 principal présente une faible inertie et est du type à membrane.

La chambre 13 de commande est de faible volume et communique avec la chambre arrière au travers d'un orifice 21 de faible section de sorte que la chambre arrière et la chambre de commande sont à la même pression.

Avantageusement, le tronçon 11A de la conduite d'évacuation en amont de l'obturateur principal, dit tronçon amont, a une section en forme de croissant disposée autour du tronçon aval 11B de cette conduite d'évacuation qui est, quant à elle, de section sensiblement circulaire, les sections de ces deux tronçons étant, par ailleurs, d'aires identiques.

L'obturateur 12 principal est un obturateur à membrane comprenant, par exemple, une zone centrale rigide constituant la partie active de l'obturateur et une zone périphérique souple pour le positionnement de l'obturateur.

On pourrait utiliser une membrane métallique.

C'est au moins, en partie, cette zone périphérique qui est soumise à la pression du gaz contenu dans la chambre arrière.

Le tronçon amont de la conduite d'évacuation se situe à l'arrière de la chambre arrière et le tronçon aval s'étend sur le côté de la chambre logeant le piston.

L'orifice 21 permettant l'introduction du gaz dans la chambre de commande est réalisé dans la membrane.

L'utilisation d'un tel obturateur permet la mise en oeuvre de large section de passage tout en faisant appel à une pièce mécanique de faible poids qui favorise la vitesse et avec une course réduite.

L'obturateur de commande est par exemple constitué par un petit piston qui se déplace sous l'effet d'un champ magnétique produit par un électro-aimant.

Avantageusement, l'échappement du gaz contenu dans la chambre de commande se fait dans le tronçon 11B aval de la conduite d'évacuation de sorte que le bruit produit lors de l'échappement du gaz est dirigé, par exemple, dans le four et non pas à l'extérieur ce qui serait gênant pour le personnel.

Avantageusement, la conduite 4 d'entrée reliant la capacité au corps de la valve logeant le piston a, sur toute sa longueur, une section de surface constante mais de géométrie qui varie selon sa position au long de l'axe longitudinal de la conduite de sorte que, au niveau du raccordement entre la conduite et le corps de la valve, cette section droite est sensiblement elliptique avec la petite dimension de l'ellipse orientée parallèlement à l'axe de déplacement du piston.

Cela permet de raccourcir le piston sensiblement à la valeur du petit axe de l'ellipse et donc de réduire sa course sans pour autant induire de perte de charge.

Un avantage également de la réalisation résulte de la disposition des composants de la valve.

En effet, l'introduction du gaz provenant de la source se fait directement à l'arrière du piston 7 et non pas comme cela est réalisé habituellement par une fuite contrôlée.

Cela améliore le maintien du piston sur son siège pendant le remplissage.

Un autre aspect intéressant est le fait que la pièce qui porte le moyen de guidage du piston et qui, avec le corps de la valve, délimite la chambre, loge le clapet qui permet l'introduction de l'air et porte sur sa face arrière l'obturateur de commande.

Ce type de montage permet un échange facile des divers éléments sans avoir recours à de nombreuses opérations de démontage-remontage.

## Revendications

1. Valve monostable pour le contrôle de la décharge brusque d'un gaz contenu dans une capacité comprenant :
- un corps (2) délimitant un chambre (3) présentant, d'une part, une conduite (4) d'entrée reliée à une capacité et, d'autre part, un orifice (5) dit de décharge vers une conduite (6) de sortie,
- un piston (7) logé dans la chambre (3) précitée se déplaçant entre une position dite d'obturation dans laquelle la face (7A) avant de ce piston (7) obture l'orifice de décharge et une position dite ouverte dans laquelle cette face avant est écartée de l'orifice de décharge de sorte que l'air de la capacité peut s'évacuer brusquement par la conduite de sortie, lequel piston :
. d'une part, présente une collerette (8) scindant la chambre (3) en une chambre avant et une chambre arrière (9) dont la face (8A) dite "face avant" tournée vers l'avant du piston et vers l'orifice de décharge est soumise à la pression de l'air emprisonné dans la capacité, laquelle pression développe une force dite d'ouverture tendant à faire reculer le piston et à l'amener en position ouverte et
. d'autre part, délimite, entre sa face (8B) arrière et le corps de la valve, la dite chambre (9) arrière dans laquelle s'exerce une pression développant sur l'arrière du piston une force dite d'obturation poussant le piston vers sa position d'obturation, laquelle force d'obturation est de module sensiblement identique mais de sens opposé à celle de la force d'ouverture,
pour abaisser brusquement la pression dans la chambre arrière classiquement la valve comprend en outre :
- situé sur une conduite (11) d'évacuation reliant la chambre (9) arrière à la conduite (6) de sortie, un obturateur (12) dit obturateur principal mobile entre une position dite de fermeture et une position dite d'échappement cet obturateur étant sollicité :
. d'une part vers sa position dite d'échappement par la pression qui, régnant dans la chambre arrière précitée, développe sur la face avant de cet obturateur une force dite d'échappement et
. d'autre part vers sa position de fermeture par la pression d'un gaz qui, contenu dans une chambre (13) dite de commande, développe sur la face arrière de l'obturateur une force dite de fermeture appliquant l'obturateur sur son siège et
- des moyens (14, 15) de rappel du piston et de l'obturateur principal respectivement en leur position d'obturation et de fermeture,
cette valve comprend en outre :
- sur une conduite (17) dite de commande reliant la chambre de commande au moins indirectement à l'atmosphère, un second obturateur (18) dit de commande mobile entre une position dite d'interruption dans laquelle le gaz contenu dans la chambre (13) de commande ne peut s'échapper et une position dite d'évacuation dans laquelle le gaz contenu dans la chambre de commande peut s'échapper,
- un moyen moteur (19) pour déplacer rapidement l'obturateur de commande vers sa position d'évacuation et
- un moyen (20) de rappel de l'obturateur de commande respectivement en sa position d'interruption,
cette valve étant **CARACTERISEE en ce que** :
- l'aire définie par la section droite de la conduite (11) d'évacuation est au moins constante voire croissante depuis la chambre (9) arrière vers la conduite (6) de sortie pour limiter la perte de charge et le tronçon (11A) de la conduite d'évacuation en amont de l'obturateur principal (12) dit tronçon amont, a une section d'aire sensiblement identique à celle du tronçon aval et
- l'obturateur (12) principal est du type à membrane.

2. Valve selon la revendication 1 **caractérisée en ce que** le tronçon (11A) de la conduite d'évacuation en amont de l'obturateur principal, dit tronçon amont, a une section en forme de croissant disposée autour du tronçon aval (11B) de cette conduite d'évacuation qui est, quant à elle, de section sensiblement circulaire.

3. Valve selon la revendication 1 **caractérisée en ce que** l'obturateur (12) principal est un obturateur du type à membrane comprenant une zone centrale rigide constituant la partie active de l'obturateur et une zone périphérique souple pour le positionnement de l'obturateur.

4. Valve selon la revendication 3 **caractérisée en ce que** l'orifice (21) permettant l'introduction du gaz dans la chambre de commande est réalisé dans la membrane.

5. Valve selon la revendication 1 **caractérisée en ce que** l'obturateur de commande est constitué par un petit piston qui se déplace sous l'effet d'un champ magnétique produit par un électro-aimant.

6. Valve selon la revendication 1 **caractérisée en ce que** l'échappement du gaz contenu dans la chambre de commande se fait dans le tronçon (11B) aval de la conduite d'évacuation.

7. Valve selon la revendication 1 **caractérisée en ce que** la conduite (4) d'entrée reliant la capacité au corps de la valve logeant le piston a, sur toute sa longueur, une section de surface constante mais de géométrie qui varie selon sa position au long de l'axe longitudinal de la conduite de sorte que, au niveau du raccordement entre la conduite et le corps de la valve, cette section droite est sensiblement elliptique avec la petite dimension de l'ellipse orientée parallèlement à l'axe de déplacement du piston.

## Claims

1. Monostable valve for controlling the sudden discharge of a gas contained in an enclosure, comprising:
- a body (2) bounding a chamber (3), having, on the one hand, an inlet pipe (4) connected to an enclosure and, on the other hand, a discharge orifice (5) to an outlet pipe (6),
- a piston (7) housed in said chamber (3) displaceable between a sealing position in which the front face (7A) of this piston (7) seals the discharge orifice and an open position in which this front face is moved back from the discharge orifice so that air in the enclosure can be discharged suddenly via the outlet pipe, which piston:
- firstly, has a collar (8) dividing the chamber (3) into a front chamber and a rear chamber (9), the face (8A) or said "front face" of which, directed towards the front of the piston and towards the discharge orifice, is exposed to the pressure of the air trapped in the enclosure, which pressure generates an opening force which causes the piston to retreat and moves it into the open position and
- secondly, delimits, between its rear face (8B) and the body of the valve, said rear chamber (9) in which a pressure building up at the rear of the piston applies a sealing force, pushing the piston towards its sealed position, which sealing force has a modulus substantially identical to that of the opening force but in the opposite direction,
the valve conventionally having in addition, as a means of suddenly reducing the pressure in the rear chamber:
- a shutter (12) or said main shutter disposed in a discharge pipe (11) linking the rear chamber (9) to the outlet pipe (6) and displaceable between a closed position and a release position, this shutter being biassed:
- on the one hand, into its said release position by the pressure prevailing in said rear chamber which builds up said release force on the front face of this shutter valve and
- on the other hand, into its closed position by the pressure of a gas contained in a control chamber (13) which generates a closing force on the rear face of the shutter to push the shutter onto its seat and
- means (14, 15) for returning the piston and the main shutter to their sealed and closed position respectively,
this valve additionally having:
- on a control pipe (17) linking the control chamber at least indirectly to the atmosphere, a second control shutter (18) displaceable between a cut-off position in which the gas contained in the control chamber (13) is unable to escape and a discharge position in which the gas contained in the control chamber is able to escape,
- a motor means (19) for rapidly displacing the control shutter into its discharge position and
- a means (20) for returning the control shutter to its cut-off position respectively,
this valve being **CHARACTERISED in that**:
- the area defined by the straight cross section of the discharge pipe (11) is at least constant and even increases from the rear chamber (9) towards the outlet pipe (6) in order to limit the pressure loss and the length (11A) of discharge pipe upstream of the main shutter (12) or said upstream length has a cross section with an area substantially identical to that of the downstream length and
- the main shutter (12) is of the type havina a membrane.

2. Valve as claimed in claim 1, **characterised in that** the length (11A) of discharge pipe upstream of the main shutter or said upstream length has a crescent-shaped section disposed around the downstream length (11B) of this discharge pipe which, in turn, has a substantially circular cross section.

3. Valve as claimed in claim 1, **characterised in that** the main shutter (12) is a shutter of the type with a membrane comprising a rigid central zone constituting the active part of the shutter and a flexible peripheral zone for positioning the shutter.

4. Valve as claimed in claim 3, **characterised in that** the orifice (21) through which the gas is introduced into the control chamber is disposed in the membrane.

5. Valve as claimed in claim 1, **characterised in that** the control shutter is a small piston which is displaced under the effect of a magnetic field produced by an electro-magnet.

6. Valve as claimed in claim 1, **characterised in that** the gas contained in the control chamber escapes through the downstream section (11B) of the discharge pipe.

7. Valve as claimed in claim 1, **characterised in that** the inlet pipe (4) linking the container to the body of the valve housing the piston has a cross section with a constant surface area across its entire length but a geometry which varies depending on its position along the longitudinal axis of the pipe, so that on a level with the link between the pipe and the body of the valve, this straight cross section is substantially elliptical with the small dimension of the ellipsis oriented parallel with the axis along which the piston is displaced.

## Patentansprüche

1. Monostabiles Ventil zur Kontrolle der plötzlichen Entladung eines in einem Kondensator enthaltenen Gases, enthaltend:
- einen Körper (2), der eine Kammer (3) begrenzt und die einerseits eine mit einem Kondensator verbundene Einlassleitung (4) und andererseits eine sogenannte Entladungsöffnung (5) zum Entladen zu einer Auslassleitung (6) aufweist,
- einen Kolben (7), der in der vorgenannten Kammer (3) aufgenommen ist und sich zwischen einer sogenannten Sperrstellung, in welcher die Vorderseite (7A) dieses Kolbens (7) die Entladungsöffnung versperrt, und einer sogenannten Offenstellung verlagert, in welcher diese Vorderseite so von der Entladungsöffnung beabstandet ist, dass die Luft des Kondensators plötzlich über die Auslassleitung abgeführt werden kann, wobei der Kolben
- einerseits einen Kragen (8) aufweist, der die Kammer (3) in eine vordere Kammer und in eine hintere Kammer (9) unterteilt, dessen sogenannte Vorderseite (8A), die dem vorderen Bereich des Kolbens und der Entladungsöffnung zugewandt ist, dem Druck der im Kondensator eingeschlossenen Luft unterliegt, welcher Druck eine sogenannte Öffnungskraft aufbaut, die versucht ist, den Kolben zurückzuschieben und in die Offenstellung zu bringen, und
- andererseits zwischen seiner Hinterseite (8B) und dem Ventilkörper die sogenannte hintere Kammer (9) begrenzt, in welcher ein Druck herrscht, der im hinteren Bereich des Kolbens eine sogenannte Sperrkraft aufbaut, welche den Kolben in seine Sperrstellung drückt, welche Sperrkraft betragsmäßig im wesentlichen gleich der Öffnungskraft ist, jedoch dieser entgegengesetzt ist,
wobei das Ventil zum plötzlichen Absenken des Drucks in der hinteren Kammer gewöhnlich enthält:
- ein sogenanntes Hauptverschließglied (12), das sich an einer die hintere Kammer (9) mit der Auslassleitung (6) verbindenden Abführleitung (11) befindet und zwischen einer sogenannten Schließstellung und einer sogenannten Entweichstellung beweglich ist, wobei dieses Verschließglied
- einerseits in seine sogenannte Entweichstellung durch den Druck beaufschlagt wird, der in der vorgenannten hinteren Kammer herrscht und an der Vorderseite dieses Verschließglieds eine sogenannte Entweichkraft aufbaut, und
- andererseits in seine Schließstellung durch den Druck eines Gases beaufschlagt wird, das in einer sogenannten Steuerkammer (13) enthalten ist und an der Vorderseite des Verschließglieds eine sogenannte Schließkraft aufbaut, mit welcher das Verschließglied an seinen Sitz gedrückt wird, und
- Rückstellmittel (14, 15) zum Rückstellen des Kolbens und des Hauptverschließglieds in ihre Sperrstellung bzw. Schließstellung,
wobei das Ventil ferner enthält:
- an einer sogenannten Steuerleitung (17), welche die Steuerkammer zumindest mittelbar mit der Atmosphäre verbindet, ein zweites sogenanntes Steuerverschließglied (18), das zwischen einer sogenannten Unterbrechungsstellung, in welcher das in der Steuerkammer (13) enthaltene Gas nicht entweichen kann, und einer sogenannten Abführstellung beweglich ist, in welcher das in der Steuerkammer enthaltene Gas entweichen kann,
- ein Antriebsmittel (19), um das Steuerverschließglied schnell in seine Abführstellung zu verlagern, und
- ein Rückstellmittel (20) zum Rückstellen des Steuerverschließglieds in seine Unterbrechungsstellung,
wobei dieses Ventil **dadurch gekennzeichnet ist, dass**
- der durch den Querschnitt der Abführleitung (11) definierte Raum zumindest konstant ist bzw. sich von der hinteren Kammer (9) zur Auslassleitung (6) vergrößert, um den Druckverlust zu begrenzen und den sogenannten vorgelagerten Abschnitt (11A) der Abführleitung, welcher dem Hauptverschließglied (12) vorgelagert ist, auf einen Raumquerschnitt zu begrenzen, der im wesentlichen gleich dem des nachgelagerten Abschnitts ist, und
- das Hauptverschließglied (12) vom Typ mit Membran ist.

2. Ventil nach Anspruch 1, **dadurch gekennzeichnet, dass** der sogenannte vorgelagerte Abschnitt (11A) der Abführleitung, welcher dem Hauptverschließglied vorgelagert ist, einen sichelförmigen Querschnitt aufweist, der um den nachgelagerten Abschnitt (11 B) dieser Abführleitung herum angeordnet ist, welche ihrerseits einen im wesentlichen kreisrunden Querschnitt aufweist.

3. Ventil nach Anspruch 1, **dadurch gekennzeichnet, dass** das Hauptverschließglied (12) ein Verschließglied vom Typ mit Membran ist, das einen starren Mittelbereich hat, welcher den aktiven Teil des Verschließglieds bildet, sowie einen nachgiebigen Umfangsbereich zur Positionierung des Verschließglieds.

4. Ventil nach Anspruch 3, **dadurch gekennzeichnet, dass** die Öffnung (21), welche das Einführen von Gas in die Steuerkammer ermöglicht, in der Membran ausgeführt ist.

5. Ventil nach Anspruch 1, **dadurch gekennzeichnet, dass** das Steuerverschließglied aus einem kleinen Kolben besteht, der sich unter der Wirkung eines von einem Elektromagneten erzeugten Magnetfelds verlagert.

6. Ventil nach Anspruch 1, **dadurch gekennzeichnet, dass** das Entweichen des in der Steuerkammer enthaltenen Gases in den nachgelagerten Abschnitt (11B) der Abführleitung erfolgt.

7. Ventil nach Anspruch 1, **dadurch gekennzeichnet, dass** die Einlassleitung (4), welche den Kondensator mit dem den Kolben aufnehmenden Ventilkörper verbindet, über ihre gesamte Länge einen konstanten, jedoch je nach Stellung entlang der Längsachse der Leitung eine veränderliche Geometrie aufweisenden Flächenquerschnitt enthält, so dass im Bereich des Anschlusses zwischen der Leitung und dem Ventilkörper dieser Querschnitt im wesentlichen ellipsenförmig ist, wobei die kleinere Abmessung der Ellipse parallel zur Kolbenverlagerungsachse ausgerichtet ist.
